(19) Europäisches Patentamt
European Patent Office
Office européen des brevets

(11) Publication number: 0 267 773 A2

(12) **EUROPEAN PATENT APPLICATION**

(21) Application number: 87309912.1

(22) Date of filing: 10.11.87

(51) Int. Cl.[4]: **C 08 G 63/68**
C 08 G 69/26, C 08 G 69/44,
C 08 G 73/06

(30) Priority: **10.11.86 US 929087 23.10.87 US 109764**

(43) Date of publication of application:
**18.05.88 Bulletin 88/20**

(84) Designated Contracting States:
**AT BE CH DE ES FR GB IT LI LU NL SE**

(71) Applicant: **E.I. DU PONT DE NEMOURS AND COMPANY**
**1007 Market Street**
**Wilmington Delaware 19898 (US)**

(72) Inventor: **Greene, Robin Nikolas**
**2533 Justin Lane**
**Wilmington Delaware 19810 (US)**

**Figuly, Garret Daniel**
**18 Drummond Drive**
**Wilmington Delaware 19808 (US)**

(74) Representative: **Woodman, Derek et al**
**FRANK B. DEHN & CO. Imperial House 15-19 Kingsway**
**London WC2B 6UZ (GB)**

(54) **Elastomers.**

(57) Elastomers are prepared from high molecular weight relatively rigid difunctional compounds and low molecular weight compounds selected from diacids, diols, diamines, hydroxyacids, hydroxyamines and aminoacids.

EP 0 267 773 A2

**Description**

## Elastomers

### BACKGROUND OF THE INVENTION

#### Field of the Invention

This invention provides novel elastomeric polymers from certain high molecular weight relatively rigid difunctional compounds and certain low molecular weight difunctional compounds. These elastomers are useful for fibers, films or molded products.

#### Description of the Prior Art

It is known from the prior art to produce elastomers by polycondensation of diesters of high molecular weight relatively rigid dicarboxylic acids with poly(alkylene oxide) glycol in substantially equimolar proportions. The present invention permits one to avoid the use of presynthesized macrodiol and to limit the amout of the expensive high molecular weight and relatively rigid component required to obtain elastomeric properties.

### SUMMARY OF THE INVENTION

This invention provides a new elastomer which is characterized by the elastomer consisting essentially of

A. from about 5 to 25 weight percent of -X-units where -X- is part of a repeat unit having the structural formula

-Y-X-Z-

where -Y- and -Z- are independently selected from

$$-O-\ ,\quad -\overset{H}{\overset{|}{N}}-\ ,\quad -\overset{CH_3}{\overset{|}{N}}-\ ,\quad -\overset{C_2H_5}{\overset{|}{N}}-\ \text{and}\ -\overset{O}{\overset{\|}{C}}-\ ,$$

-X- is a divalent organic radical consisting of a chain of ring structures except for trans-amide, carbonyl, trans-vinylene, azo (i.e., -N=N-) and azomethine (i.e., -HC=N-) linkages which may be present and whose shortest length between centers of its terminal junctions measured from a Dreiding model laid flat is at least 11 Angstroms; and when -X- is in the compound:

$$C_4H_9-O-\overset{O}{\overset{\|}{C}}-X-\overset{O}{\overset{\|}{C}}-OC_4H_9\ ,$$

the compound exhibits a melting point that is at least about 225° C; and

B. at least 75 weight percent of units selected from the following

a. $-O-R-O-$, and/or

$$-\overset{R^5}{\overset{|}{N}}-R^1-\overset{R^5}{\overset{|}{N}}-$$

and

b. $-\overset{O}{\overset{\|}{C}}-R^2-\overset{O}{\overset{\|}{C}}-$ and/or $-\overset{O}{\overset{\|}{C}}-$, in which both free bonds are connected to oxygen and/or nitrogen, and/or

c. $-\overset{O}{\overset{\|}{C}}-R^3-O-$ and/or $-\overset{O}{\overset{\|}{C}}-R^4-\overset{R^5}{\overset{|}{N}}-$

and optionally an effective amount of

d. $-\overset{H}{\overset{|}{N}}-R^6-A-$

wherein

R, $R^1$, $R^2$, $R^3$ and $R^4$ are each aliphatic divalent organic radicals, having from 2 to 15 carbon atoms within the chain, with each having a molecular weight of under 450,

$R^5$ is a hydrocarbon radical,

$R^6$ a divalent aliphatic or cycloaliphatic radical having 1 to 15 carbon atoms, or a divalent aromatic radical containing 1, 2 or 3 six-membered rings, the rings being non-substituted or substituted with monovalent or divalent alkyl radicals having 1 to 4 carbon atoms, provided that when the alkyl is divalent, one of the

valencies is connected to the -NH- radical or to the -A- radical, and

-A- is 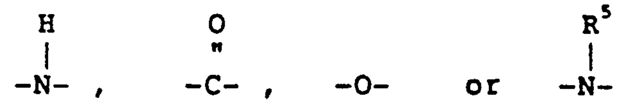 , , -O- or .

Usually, the d. units amount to 1 to 15% by weight of the polymer. It will be understood, of course, that the polymer must be balanced stoichiometrically. The invention also includes fibers, films, or molded articles from the polymers and processes for manufacture of the polymers.

DETAILED DESCRIPTION OF THE INVENTION

The novel polymer of this invention is an elastomer. By this is meant a polymer which, free of diluents, retracts to less than 1.5 times its original length within one minute after being stretched at room temperature to twice its length and held for one minute before release. This definition corresponds to that given in "ASTM D1566-83a" for a modified rubber. Polymers of the invention are useful in a number of end use applications. Hot melt adhesives, tubing and injection moldings and melt-spun elastic fibers are among such uses. The polymer should preferably have an inherent viscosity of at leat 0.55 dL/g when measured as described below.

The polymer is basically comprised of two components, a "hard" segment and a "soft" segment. The "hard" segment corresponds to -X- in units having the formula -Y-X-Z-, the -X- units being present in the polymer in an amount of from about 5 to 25% by weight. The groups -Y- and -Z- are independently selected from

-O- , 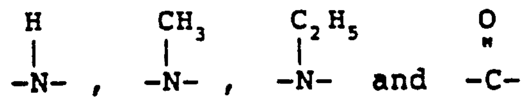 , , and

and are attached directly to -X-, or may be separated therefrom by spacer groups (not part of -X-) such as one or more methylene groups. The symbol -X- is a divalent radical whose shortest length between centers of its terminal junctions is at least 11 Angstroms as measured flat, or as flat as can be, with "Dreiding Models" which are constructed to be in precise scale to the actual inter-atomic distances. This technique is known in the prior art and is described in the article by Andre S. Dreiding, Helv. Chim. Acta 42, 1339 (1959). The Dreiding models can be conveniently constructed from units obtained from Brinkman Instruments Inc., Cantiague Road, Westbury, NY. The terminal junction is the ring carbon atom of -X- that is attached to the functional group -Y- or -Z- as shown in formula (I) below or any carbon of -X- that is attached to the -Y- or -Z- group, as shown in formula XI below.

Basically, -X- is a radical made up of a chain or backbone of ring structures. The rings of the structure can be fused or not fused. When not fused, the rings are connected to each other within -X- by trans-amide, carbonyl, trans-vinylene, azo or azomethine linkages. The ring structures, which may be, but preferably are not, substituted, include

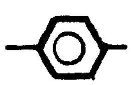 , 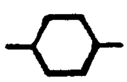 , 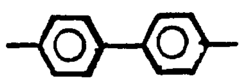 ,

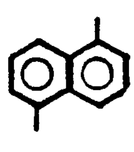 , and 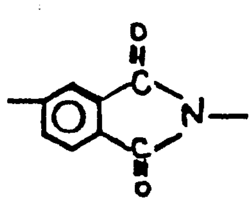 ,

among others.

The "hard" segment is further characterized by the melting point of the dibutyl ester of the diacid $HO-\overset{O}{\overset{\|}{C}}-X-\overset{O}{\overset{\|}{C}}-OH$ where -X- is as defined above. The present invention requires this dibutyl ester to have a melting point of at least about 225°C. measured as described below.

Dibutyl esters are prepared in a manner apparent to those skilled in the art. For example, the dibutyl esters of bis-trimellitimides are prepared by reaction of two moles of the mono-butyl ester of trimellitic anhydride with one mole of the appropriate diamine. The mono-butyl ester of trimellitic anhydride is formed by reaction of one mole of trimellitic anhydride acid chloride with one mole of n-butanol.

Dibutyl esters of diacids based on the reaction of two moles of p-aminobenzoic acid and one mole of a dianhydride are made by reaction of two moles of the mono-butyl ester of p-aminobenzoic acid and one mole

of the dianhydride.

A number of -Y-X-Z- units are listed below as follows:

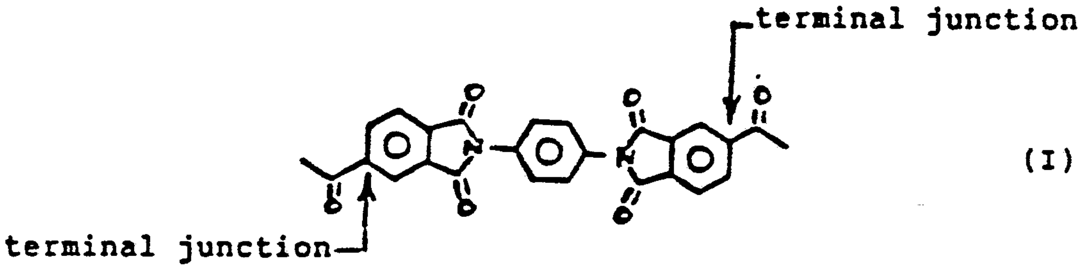


(I)

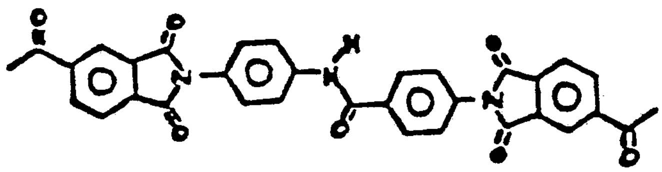

(II)

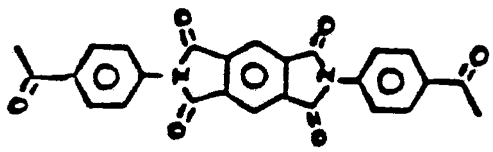

(III)

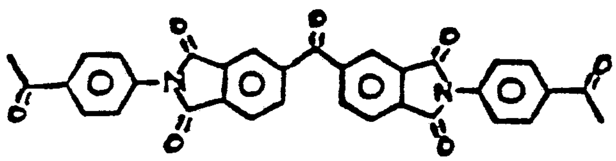

(IV)

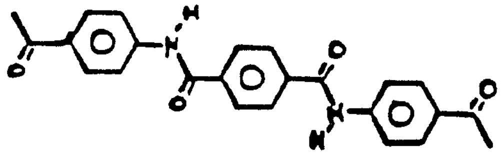

(V)

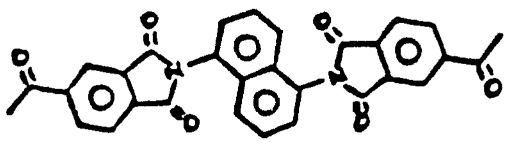

(VI)

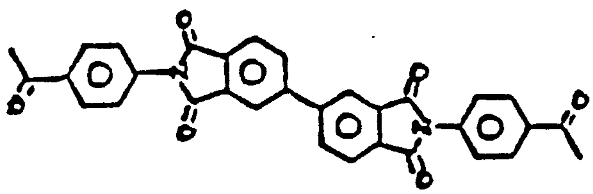

(VII)

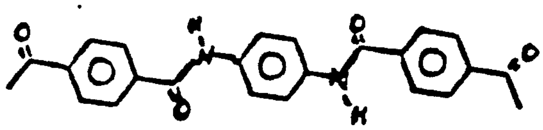

(VIII)

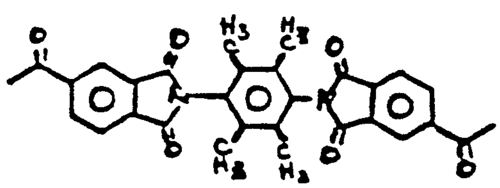

(IX)

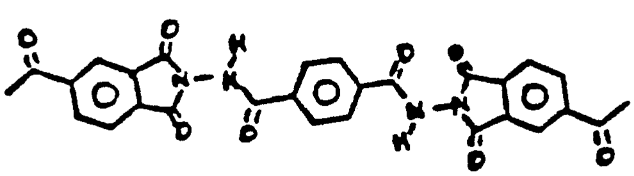

(X)

Terminal Junction

Terminal Junction

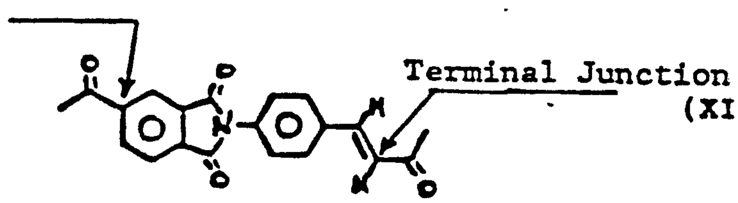

(XI)

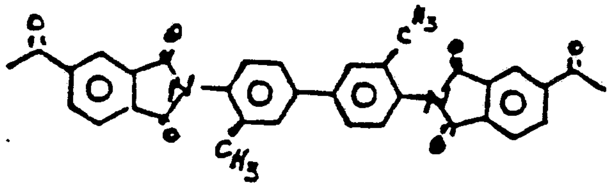

(XII)

and

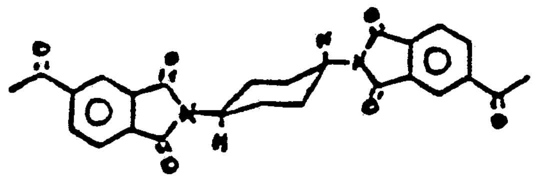

(XIII).

The following list of units also would be expected to meet the requirements for the -Y-X-Z-

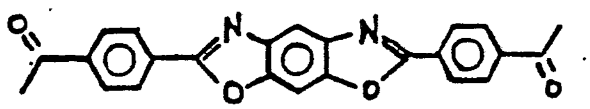

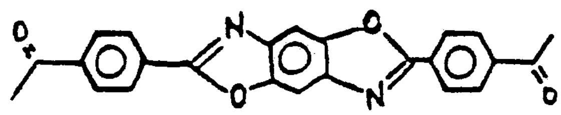

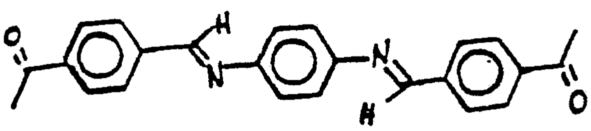

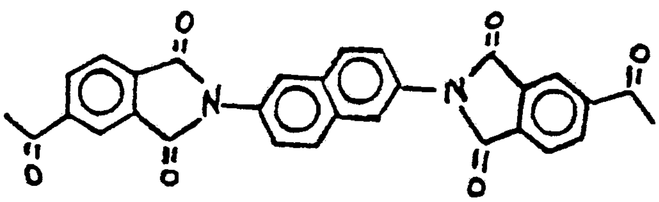

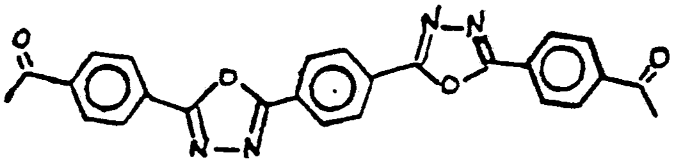

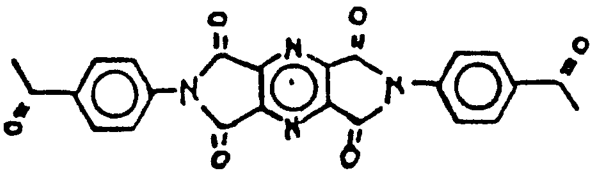

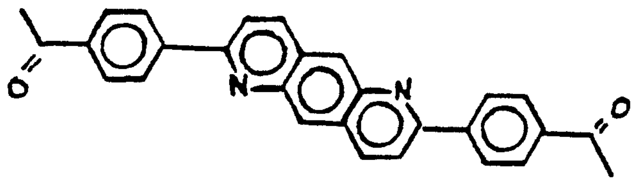

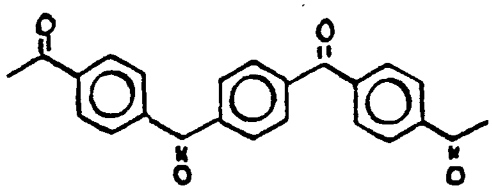

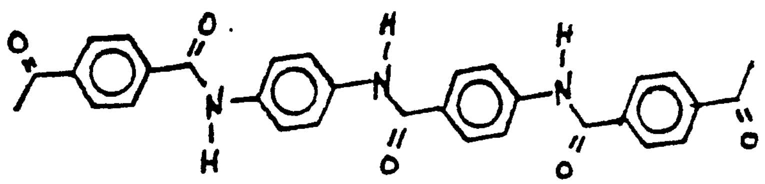

The -Y-X-Z- units are residues of diacids, diols, diamines, hydroxyacids, hydroxyamines and aminoacids. The compounds that provide the -Y-X-Z-untis are referred to herein as hard segement precursors, abbreviated as "HSP". Such compounds and their preparation are described in the prior art or can be prepared by techniques well known to those skilled in the art. Preparation of compounds which provide -Y-X-Z-units is illustrated in examples which follow. A preferred synthesis procedure involves making such compounds in a polymer reaction medium of ingredients which ultimately provides the soft segment of the polymer.

In the event an -Y-X-Z- unit in diacid or diol form has an undesirably high melting point which interferes with dissolution in the reaction medium, it may be empolyed or formed in the form of a more soluble derivative, such as the diester in the case of the diacid. In syntheses where -X- contains a plurality of aromatic amide linkages there is a tendency for the hard segment to cleave. Care must be exercised to avoid scission under the polymerization conditions such as by use of less severe reaction conditions as by use of the aliphatic diacid(s) in the form of their dimethyl esters and by use of hindered aliphatic diol(s) such as neopentyl glycol or 1,2-propanediol.

The remainder of the elastomer composition, about 75 to 95% by weight of the polymer, is the "soft" segment, which is substantially amorphous. It has a glass transition temperature below room temperature, and is made up of units a. plus units b. and/or c. plus optional units d. (when present), as follows:

a. $-O-R-O-$ and/or

$-\underset{|}{\overset{R^5}{}}N-R^1-\underset{|}{\overset{R^5}{}}N-$

and

b. $-\overset{O}{\overset{\|}{C}}-R^2-\overset{O}{\overset{\|}{C}}-$ and/or $-\overset{O}{\overset{\|}{C}}-$, in which both free bonds are connected to oxygen and/or nitrogen, and/or

c. $-\overset{O}{\overset{\|}{C}}-R^3-O-$ and/or $-C-R^4-\overset{R^5}{\overset{|}{N}}-$

and optionally an effective amount of

d. $-\overset{H}{\overset{|}{N}}-R^6-A-$

wherein the d. units preferably amount to from 1 to 15 % of the total weight of the polymer and

R, $R^1$, $R^2$, $R^3$ and $R^4$ are each aliphatic divalent organic radicals, having from 2 to 15 carbon atoms within the chain, with each having a molecular weight of under 450,

$R^5$ is a hydrocarbon radical,

$R^6$ is a divalent aliphatic radical having 1 to 15 carbon atoms, or a divalent aromatic radical containing 1, 2 or 3 six-membered rings, the rings being non-substituted or substituted with monovalent or divalent alkyl radicals having 1 to 4 carbon atoms, provided that when the alkyl radical, of unit d. is divalent, one of the valencies is connected to the -NH-radical or to the -A- radical, and

-A- is

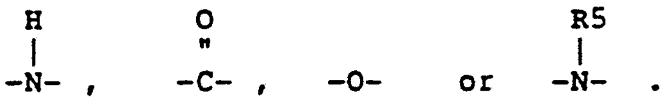

The term "aliphatic" is intended to include straight chain, branched chain and cycloaliphatic, as well as aliphatic which may be interrupted with -O-, -S-, tertiary nitrogen or may be substituted, as for example, with halogens. Preferably the aliphatic radical is a saturated hydrocarbon, although small amounts of unsaturated units, such as are derived from 2-butene,4-diol or maleic acid, are also permitted. The $R^5$ hydrocarbon radical preferably is a phenyl or an alkyl having 1 to 6 carbon atoms. It is expected that if halogen substituents were attached to permitted rings of $R^6$ of unit d., the resultant polymer would be about equivalent to the same polymer having monovalent alkyl radical substituents on the rings.

The "soft" segment may include minor amounts, i.e., less than about 20% by weight of the soft segment, of units not conforming to these formulas, such as units from hydroquinone, terephthalic acid or higher molecular weight macrodiols, such as polyalkylene ether glycols or macrodiacids, such as "dimer acid", the commercially available diacid obtained by coupling of two long chain unsaturated monocarboxylic fatty acids.

The polymer of the present invention is "stoichiometrically balanced". This means, for example, that the number of moles of unit a. is substantially equal to the sum of the moles of unit b. plus the moles of -Y-X-Z- when both -Y- and -Z- are carbonyl groups, and the number of moles of unit b. is substantially equal to the sum of the moles of unit a. plus moles of -Y-X-Z- where both -Y- and -Z- are

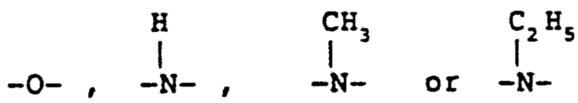

If -Y- is carbonyl and -Z- is

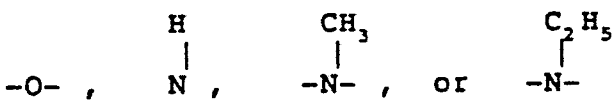

then the number of moles of unit a., if present, will be substantially equal to the number of moles of unit b. similarly, the number of moles of unit d. substantially equals the sum of the moles of unit b. plus the moles of -Y-X-Z- when -A- of unit d. is

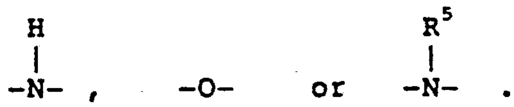

If -A- is a carbonyl radical, then the number of moles of unit a., if present, substantially equals the number of moles of unit b.

The unit, -O-R-O-, is the residue of a low molecular weight aliphatic diol. Included among the diols useful in this invention are ethylene glycol, 1,2-propylene glycol, 1,3-propylene glycol, 1,2-, 1,3-, and 1,4-butylene glycol, 1,6-hexanediol, neopentyl glycol and diethylene glycol. Neopentyl glycol is especially useful. Aliphatic diols having a tertiary nitrogen atom in the chain are also useful. Mixtures of the diols are often used with improved results. Minor amounts of aromatic diols may be included in a diol mixture provided they do not interfere with the desired elastomeric properties. In place of or in addition to the diols, low molecular weight diamines may be employed in the preparation of the polymer. The unit,

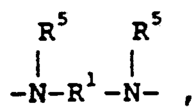

represents the residue of suitable low molecular weight aliphatic diamines. Included among such suitable compounds are N,N'-dibutylpentamethylenediamine and N,N'-dimethylhexamethylenediamine. The functional equivalents of the diols and diamines may be used in the preparation. Thus, for example, epoxides can be used in place of the dihydroxy compound, which in the case of phenylglycidyl ether is 1,2-dihydroxy-3-phenoxypropane.

The unit $-\overset{O}{\overset{\|}{C}}-R^2-\overset{O}{\overset{\|}{C}}-$ and the unit $-\overset{O}{\overset{\|}{C}}-$ are, respectively, residues of an aliphatic dicarboxylic acid and carbonic acid. Included among the useful acids are succinic, glutaric, adipic, azelaic, carbonic and dodecanedioic acid, as well as their functional equivalents, such as the esters, acid halides and anhydrides thereof. Adipic acid and dibasic acids having at least 7 straight-chain carbon atoms between the carboxyl atoms are particularly useful. Mixtures of acids may be used if desired. Aromatic dicarboxylic acids may be used only in minor amounts in admixture with the low molecular weight aliphatic dicarboxylic acids since larger amounts cause a substantial increase in the glass transition temperature, Tg, of the elastomer, impairing low temperature, Tg, of the elastomer, impairing low temperature performance.

The unit, $-\overset{O}{\overset{\|}{C}}-R^3-O-$, is the residue of an aliphatic hydroxyacid. Examples of such hydroxyacids include 12-hydroxystearic acid, 10-hydroxydecanoic acid and 4-hydroxycaproic acid as well as their functional equivalents, such as lactones. Mixtures of hydroxyacids may be used if desired. Hydroxyaromatic acids, such as hydroxybenzoic acid, may be used in minor amounts in admixture with the aliphatic hydroxyacids provided they do not interfere with the desired elastomeric properties. Similarly, the unit,

$-\overset{O}{\overset{\|}{C}}-R^4-\overset{R^5}{\overset{|}{N}}-$ ,

which is the residue of an aliphatic aminoacid may be present in place of or in addition to the

$-\overset{O}{\overset{\|}{C}}-R^3-O-$ units.

One such aminoacid is N-butyl-6-aminohexanoic acid. $R^5$ is as defined above.

Optional unit d., $-\overset{H}{\overset{|}{N}}-R^6-A-$, is the residue of a low molecular weight primary amine. Suitable compounds for providing the residue include diamines, such as hexamethylene diamine or trans-1,4-diaminocyclohexane, or amino alcohols, such as 3-amino-1-propanol, or amino acids, such as 11-aminoundecanoic acid, 6-aminocaproic acid, p-aminobenzoic acid, 4-methylaminobenzoic acid or 4-aminophenylacetic acid, and functional equivalents, such as ε-caprolactam and the like, or mixtures thereof.

When present, unit d. usually amounts to 1 to 15 percent of the total weight of the elastomer. The amount of unit d. needed to be effective in improving the elastic and set properties of the elastomer depends on, among other things, the particular hard segment, the amount of hard segment and the particular other units present in the elastomer. For example, the improvement is most evident when the amount of hard segment amounts to 15 to 25 percent of the elastomer weight. Preferably, unit d. amounts to 3 to 6 % when the unit d. is the residue of a diamine or of an amino alcohol and 5 to 10 % when unit d. is the residue of an amino acid. Units d. preferably are derived from 3-amino-1-propanol, trans-1,4-diaminocyclohexane, 11-aminoundecanoic acid and 6-aminocaproic acid.

Amorphous soft segments usually are desired for superior elastomer properties. Various techniques can be used to avoid crystallinity in the soft segment. For example, one can use a mixture of aliphatic diols with one aliphatic diacid, or a mixture of aliphatic diacids with one aliphatic diol, or N-alkyl groups in the units a. described above.

The aforementioned units a., b. and c. of the soft segment can be supplied from polyester macromolecules which revert to the diols and diacids (and oligomers thereof) from which they are formed. This reversion can occur in the course of preparation of the thermoplastic elastomer of the present invention. The aforementioned unit d. of the soft segment can be supplied from a short segment (oligomer) of a polyamide wich reverts to the amino acid or corresponding diacids and diamines or amine alcohols.

With the diester or diacid hard segment precursors described herein, the elastomers can be made conveniently by conventional esterification and/or ester interchange reactions. One procedure, for example, involves heating at about 200 to 300°C in the presence of a catalyst, (1) the diacid that provides the hard segment, e.g., p-phenylene-bis-(N-trimellitimide) which yields (I), with (2) reactants that form the soft segment such as (i) a low molecular weight diol or mixture of diols in molar excess (ii) a low molecular weight aliphatic diacid or mixture of diacids, and (iii) ingredients that yield primary amine units (units d.). Heating is continued until all the water formed by the esterification reaction is distilled off. The heating can require a few minutes or a few hours, depending on the particular reactions taking place. As a result of this procedure a low molecular weight prepolymer is prepared which can then be formed into a high molecular weight copolyester by the procedure described below. If the dimethyl ester of the low molecular weight aliphatic diacid is used in place of the free acid, methanol is evolved instead of water. Also, anhydrides or acid chlorides can be used with or instead of the diacids. Alternatively, the prepolymer can be prepared from the free acids with diacetates fo the aliphatic diols (in which case, acetic acid is removed by distillation), or with "ethylene oxide type" cyclic ethers

or with carbonates. If desired, an ester interchange can be performed, for example, by reacting the diacid which provides the hard segment with a high or low molecular weight ester homopolymer or copolymer in the presence of caralyst until randomization occurs. A small amount of low molecular weight aliphatic diacid or diol can be added for stoichiometric balance, if needed.

In another alternative process for preparing an alastomer of the invention, the precursors of the high molecular weight diacid and one or more diols providing unit a. are first formed into a slurry after which a catalyst and one or more diacids providing unit b. and one or more primary amine compounds providing unit d. are added. The resultant mixture is then heated to form the prepolymer.

The molecular weight of the prepolymer is increased by distilling off the excess diol along with evolved water or methanol. Further esterification and/or ester interchange occurs during the distillation, which causes the molecular weight to increase and the arrangement of the copolyester units to be random. Usually, superior results are obtained when the final distillation or polycondensation is performed at a pressure of less than 5 mm and a temperature in the range of 250 to 300° C for less than 4 hours in the presence of antioxidants such as N,N′-hexamethylene-bis(3,5-di-tert-butyl-4-hydroxyhydrocinnamanide). To avoid excessive time periods at high temperatures, with possible accompanying irreversible thermal degradation, it is advantageous to employ a catalyst for the esterification and/or ester interchange reactions. A wide variety of caralysts can be used. Organic titanates, such as tetrabutyl titanate (TBT), used alone or in combination with magnesium or calcium acetates, are preferred when ester interchange is the sole mechanism of polymerization. Inorganic titanates such as lanthanum titanate, calcium acetate/antimony trioxide mixtures and lithium and magnesium alkoxides are representative of other suitable catalysts. When direct esterification (between diols and diacids) is employed in the presence of compounds providing primary amine units d., antimony trioxide is the preferred caralyst.

The esterifications or ester-interchanges usually are performed in the melt without added solvent, though inert solvents can be used to facilitate removal of volatile components at lower temperatures. This technique is especially valuable during preparation of prepolymer by direct esterification. However, certain low molecular weight diols (e.g., butanediol) can be conveniently distilled off during polymerization. Batch and/or continuous methods can be used for the various stages of the copolyester polymer preparation. Polycondensation of prepolymer can also be accomplished in the solid phase by heating finely divided solid prepolymer in a vacuum or in a stream of inert gas to remove low molecular weight products.

The elastomers of this invention possess many desirable properties. However, it is sometimes advisable to protect certain of the compositions against heat of radiation by ultra-violet light by incorporating stabilizers in the elastomer. Satisfactory stabilizers include phenols and their derivatives, amines and their derivatives, compounds containing both hydroxyl and amine groups, hydroxyazines, oximes polymeric phenolic esters and salts of multivalent metals in which the metal is in its lower valence state. Among such phenol derivatives are 4,4′-bis(2,6-ditertiary butylphenol) and 1,3,5-trimethyl-2,4,6-tris-(3,5-ditertiarybutyl-4-hydroxybenzyl)benzene ("AO-330", sold by Ethyl Corp., Baton Rouge, Louisiana). Also suitable are various inorganic metal salts or hydroxides and organic complexes, such as nickel dibutyldithio-carbamate, manganous salicylate and copper 3-phenyl-salicylate. Suitable amine stabilizers include N,N′-bis(β-naphthyl)-p-phenylenediamine, N,N′-bis(1-methylheptyl)-p-phenylenediamine and either phenyl-betanaphthylamine or its reaction products with aldehydes. Mixtures of hindered phenols with esters of thiodipropionic acid, mercaptides and phosphite esters are particularly useful. Additional stabilization to ultraviolet light can be obtained by incorporating various UV absorbers, such as substituted piperidyl derivatives, substituted benzophenones or substituted benzotriazoles.

Sometimes, branching agents are incorporated, at a concentration of 0.001 to 0.005 equivalents per 100 g of polymer, to increase melt strength, as disclosed in for example, U.S. Patents 4,013,624 and 4,205,158. Suitable branching agents include polyols having 3 to 6 hydroxyl groups, polycarboxylic acids having 3 or 4 carboxyl groups or hydroxy acids having a total of 3 to 6 hydroxyl and carboxyl groups. Among such polyols are glycerol, trimethylol propane, 1,2,6-hexanetriol, 1,1,4,4-tetrakis(hydroxymethyl)cyclohexane, sorbitol, and pentaerythritol. Suitable polycarboxylic acid branching agents include hemimellitic acid, trimellitic acid, trimesic acid, 1,1,2,2-ethanetetracarboxylic acid, pyromellitic acid, 1,1,2-ethanetricarboxylic acid, 1,2,3,4-cyclopentanetetracarboxylic acid, and 1,3,5-pentanetricarboxylic acid. Although the acids can be used as such, preferably they are used in the form of their lower alkyl esters.

Properties of the elastomers of the invention can be modified by incorporation of various conventional inorganic fillers, such as carbon black, silica gel, alumina, clays and reenforcing fiber (e.g.,glass). Usually, these additives increase the elastomer modulus at various elongations. The desired hardness of the elastomer can be obtained by blending elastomers of the invention having different percentages of hard and soft segments.

A method for improving the tenacity and set of fibers or films made from these polymers comprises heating the fibers or films for at least two hours at temperatures of at least 150° C in an inert atmosphere (as disclosed in U.S. Patent 3,801,547). If desired, slight or moderate tension can be applied during heating. Excessively long heating periods and excessively high temperatures should be avoided to prevent deterioration of the polymer or of the fiber or film made from the polymer.

The elastomers of the invention which contain effective amounts of primary amine units d. in its soft segments, compared to elastomers of like composition that do not contain such units d., can form tapes and filaments with significantly improved properties. For example, elastomers containing such primary amine units

can provide tapes or filaments which exhibit 50% less set, 50-100% higher break elongation, and easier processability. The improvements are particularly evident in elastomers of the invention that contain high percentages of hard segments in the elastomer (e.g., 15-25% of total polymer weight). Such elastomers provide tapes or filaments with increases of as much as 100% in tenacity and 50-70% in unload power, with little reduction in break elongation. For elastomers of the invention containing such high contents of hard segments, it is preferred that the molar ratio of soft segment primary amine units d. to hard segment A. units be in the range of 0.1 to 1.6, most preferably 0.5 to 1.1. When smaller percentages of hard segment are in the elastomer, the preferred molar ratio of primary amine units to hard segment is less than 1.0.

Test Procedures

Inherent viscosity, in deciliters per gram (dL/g), is measured in accordance with W. R. Sorenson and T. W. Campbell, "Preparative Methods of Polymer Chemistry", Interscience, 2nd Ed. (1968) p. 44, on a solution of 0.5 gram of polymer in 100 ml of m-cresol at 30°C (unless the polymer is insoluble).

Melting point, unless indicated otherwise, is measured with a Du Pont Model 9900-Differential Scanning Calorimeter (DSC) in accordance with B. Wunderlich, "Thermal Analysis", published by Rensselaer Polytechnic Institute (1981), and is defined as the temperature at the lowest point of the endotherm of transition to an isotropic melt.

Tenacity at break, T, in grams per denier (gpd) and percent elongation at break, E, are measured in accordance with ASTM Method D 2653-72, "Standard Test Method for Breaking Load and Elongation of Elastomeric Yarns," and are reported as "T/E" in the examples.

The % set was measured in accordance the method of ASTM Method D 2731-72, "Standard Test Method for Elastic Properties of Elastomeric Yarns. "Unload power", in grams per effective denier (g/eff den), also is measured in accordance with the general method of ASTM D 2731-72. Three filaments, a 2-inch (2.5-cm) gauge length and a 0-to-300% elongation cycle are used for each determination. Unload power (i.e., the stress at a specific elongation) is measured after the samples have been cycled five times at a constant elongation rate of 1,000% per minute and then held at the 300% extension for half a minute after the fifth extension. Then, while unloading from this last extension, stess is measured and reported in g/eff den at 100% elongation.

The examples which follow illustrate the present invention and are not intended to limit its scope, which is defined by the claims.

In the examples, each sample of the invention is designated with an arabic numeral and each comparison or control sample is designated with a lower case letter. Example I illustrates various elastomers of the invention having different hard segments (i.e., different -X- units). Example II illustrates the invention with different starting materials for the hard segments. In Example III, elastomers of the invention include various a., b. and/or c. unit soft segments and other minor components. An elastomer of the invention which contains a branching agent and one which contains 4.3% -X- units are set forth in Example IV. Examples V through VIII illustrate elastomers in which optional amine units d. are included. Example IX illustrates alternative processes for making the elastomers.

Diacids and elastomers formed therewith were prepared by the following methods. Except for Example I and unless indicated otherwise, the diacid providing radical (I) was used in each example.

Preparation of Diacid Providing Radical (I)

The diacid, p-phenylene-bis-(N-trimellitimide), was synthesized by adding 54 g of p-phenylenediamine in 200 cc of anhydrous N,N-dimethylformamide (DMF) to a solution of 192 g of trimellitic anhydride in 500 cc anhydrous DMF, under reflux conditions. After 2 hours of reflux and cooling, the resultant material was filtered and dried in a vacuum oven 110°C to remove solvent. The yield was 191 g. A portion recrystallized from DMF had a DSC melting point of 455°C. The di-n-butyl ester of this diacid was synthesized and exhibited an nmr (nuclear magnetic resonance) spectrum consistent with the attributed structure. The DSC melting point of the ester was 274.8°C. The size of the group "X" in the diacid which provides radical I defined above, as measured from a Dreiding model laid flat in its shortest conformation, was 15 Angstroms. The shortest conformation is with the carboxyl carbonyls positioned cis to one another.

Preparation of Elastomer

In each of the examples below, polymerization was performed in a 350-mL kettle that was equipped with a mechanical stirrer, a nitrogen inlet, a Wood's metal heating bath and a vacuum distillation column. After the desired ingredients were placed in the kettle, the kettle was purged with nitrogen and placed in the bath, which was maintained at a temperature of 220°C. The ingredients were stirred rapidly for 45 minutes. The bath temperature was then increased and maintained at 280-285°, while rapid stirring was continued, for about 1-2 hours, until a homogeneous melt was obtained. Then, temperature was decreased to about 270°C and pressure inside the kettle was deccreased to 0.50-0.25 mm Hg over the course of about 1.5 hours. Stirring was continued for about 20 minutes until a viscous melt was obtained. The molten polymer was then removed from the kettle.

EXAMPLE I

The fabrication of thirteen different elastomers of the invention and their properties after being formed into fibers or strips are illustrated in this example. Each of the thirteen samples has a different hard segment unit

-X-; namely, a divalent radical -X-, as defined hereinbefore by the formulae I through XIII. Table I below records the minimum Dreiding Model length between the centers of the terminal junctions of the radicals -X- and the DSC melting temperature of the di-n-butyl ester of the radical -X-. This example also includes three comparison elastomers whose Dreiding model length and di-n-butyl ester melting characteristics are outside the scope of the invention. The polymerizations for each of the samples of this example were performed substantially as described for Sample I-1, unless specifically stated otherwise.

Sample I-1

For this sample, 20.0g of a mixture containing 13% adipic acid, 60% glutaric acid, and 27% succinic acid, 10.37g of p-phenylene-bis-(N-trimellitimide), 3.2g of phenylglycidyl ether, 11.3g of ethylene glycol, 3.2g of diethylene glycol, and 0.3 g of antioxidant were mixed at room temperature, after which 1.5cc of a 1% solution of antimony trioxide was added. The mixture under nitrogen was immersed in a Woods metal bath at 297°C. After initial foaming, the refluxing solution became clear in 40 min. After refluxing another 13 min, the pressure was reduced to 250 mm Hg over a period of 31 min, after which time, full pump vacuum was applied and the temperature was decreased at 283°C. After 85 min at 0.1mm pressure, the polymer became very viscous. Vacuum was released by introduction of nitrogen, stabilizers were added, and the melt polymerized a further 25 min at 0.1mm pressure. The resultant elastomer was cut up and extracted with acetone. Stabilizers were added. Then the elastomer was dried at 110°C under nitrogen for 24 hr.

Differential Scanning Calorimetry (DSC) measurements of the resultant polymer (after extracting with acetone) showed a glass transition temperature, Tg, of -22.1°C and a melting point of 220.0°C. The elastomer was calculated to contain 21.8 weight % of -X-units derived from p-phenylene-bis-(N-trimellitimide). The polymer had an inherent viscosity in m-cresol of 0.59. Films were cast from DMAC. After removal of solvent in a vacuum oven 100°C under nitrogen, strips of the resultant film had a T/E of 0.084/43 (the film was "short-breaking" due to the low molecular weight of this particular sample). A film kept for 3 days at 160°C under vacuum and nitrogen was a tough elastomer and had a T/E of 0.113/247 and a set of 83% after five extension cycles to 300%.

Sample I-2

For this sample, 33.4g of azelaic acid, 8.2 g of the dibutyl ester of the diacid radical II, 20.3g of diethylene glycol, 3g of ethylene glycol, 0.15 g of antioxidant and 0.1 g of tetra-n-butyl-phosphonium salt of 3,5-dicarbomethoxybenzene 1-sulfonic acid (TBPS) were mixed at room temperature, after which 1.5cc of a 1% solution of antimony trioxide in ethylene glycol was added and the mixture was polymerized.

DSC measurements of the resultant tough elastomer showed a Tg of -48.3°C. The polymer was calculated to contain 10.8% by weight of -X- units corresponding to diacid radical II. The inherent viscosity was 1.46. A film was cast from a 10% solution in N,N-dimethylacetamide (DMAC). After removal of solvent in a vacuum oven at 100°C under nitrogen, strips of the resultant film had a T/E of 0.078/1058 and a set of 26.7% after five extension cycles to 300%.

Sample I-3

For this sample, 33.4g of azelaic acid, 8.73g of the dibutyl ester of diacid radical III, 20.5g of diethylene glycol, 3g of ethylene glycol, 0.15g of antioxidant, and 0.1g of TBPS (not essential, but added as a melt stabilizer) were mixed at room temperature, after which 1.5cc of a 1% solution of antimony trioxide in ethylene glycol was added and the mixture was polymerized.

DSC measurements of the resultant tough elastomer (after extracting with acetone) showed a Tg of -46.3°C. The polymer was calculated to contain 10.4% by weight of -X- units corresponding to the diacid radical III. The polymer was insoluble in m-cresol. However, a film was cast from a 10% solution obtained by boiling in DMAC. After removal of solvent in a vacuum oven at 100°C under nitrogen, strips of the resultant film had a T/E of 0.026/900 and a set of 25.6% after extending 5 times to 300%. A film kept for 3 days at 160°C under vacuum and purged with nitrogen had a T/E of 0.171/738 and a set of 15 % after five extension cycles to 300%.

Sample I-4

For this sample, 25g of adipic acid, 10g of glutaric acid, 7.4g of the dibutyl ester of diacid radical IV, 24.5g of 1,4-butanediol, 4g of ethylene glycol, 0.3g of antioxidant, and 0.2g of the TBPS were mixed at room temperature after which 1.5cc of a 1% solution of antimony trioxide in ethylene glycol was added and the mixture was polymerized.

DSC measurements of the resultant tough elastomer (after extracting with acetone) showed a Tg of -50.8°C and a melting point of 149.3°C. The polymer was calculated to contain 9.4% by weight of -X- units corresponding to diacid radical IV. Inherent viscosity of the polymer was 1.18. A fiber melt-spun at 250°C from this polymer had a T/E of 0.070/403 and a set of 26.3% after five extension cycles to 300%.

Sample I-5

For this sample, 26.7 g of an 80/20 by weight mixture of the dimethyl esters of glutaric and adipic acids, respectively, 6.6g of the diethyl ester of the diacid corresponding to radical V, 23.5g neopentyl glycol, and 0.15g of AO 330 were mixed at room temperature, after which 1.5cc of a 5% solution of tetra-n-butyltitanate

(TBT) in ethylene glycol was added and the mixture was polymerized.

DSC measurements of the resultant soft elastomer showed a Tg of -21.4° C. The composition was calculated to contain 11.1% of -X- units derived from diacid radical V. The polymer had an inherent viscosity of 0.40 in m-cresol. A cast film heated at 160° C for three days under nitrogen and vacuum to increase the molecular weight was a weak thermoplastic elastomer, a strip of which had T/E of 0.032 gpd/504% and a % set of 13.6 after five extension cycles to 300%.

Sample I-6

For this sample, 15.2g of adipic acid, 6.1g of glutaric acid, 6.3g of the dibutyl ester of the diacid corresponding to radical VI, 19g of 1,6-hexanediol, 2g of ethylene glycol, 2g of 1,3-propylene glycol, 0.2g of antioxidant, and 0.15g of the TBPS were mixed at room temperature, after which 1.5cc of a 1% solution of antimony trioxide in ethylene glycol was added and the mixture was polymerized.

DSC measurements of the resultant elastomer showed a Tg of -45.6° C. The polymer was calculated to contain 10.6% of -X- units derived from diacid radical VI. The polymer was insoluble in the m-cresol solvent, but was readily soluble in DMAC. A film was cast from a solution in DMAC. After removal of solvent in a vacuum oven at 100° C under nitrogen, strips of the resultant film had a T/E of 0.138/678 and a set of 16.7% after five extension cycles to 300%.

Sample I-7

A mixture was prepared of 29.0g of an 80/20 weight percent blend of dimethyl esters of glutaric and adipic acids, 6.19g of the dietyl ester of the diacid corresponding to radical VII, 20g of 1,4-butylene glycol, and 0.15g of antioxidant. Then 1.5 cc of a 5% solution of TBT in ethylene glycol was added and the mixture was polymerized as for Sample I-1, except that the final polymerization temperature was 274° C. The resulting tough elastomer showed a Tg of -51.3° C and endotherms of 68.1 and 126.6° C by DSC. The polymer was calculated to contain 11.7% by weight of -X- units derived from diacid radical VII.

A film cast from a dimethyl acetamide solution of the polymer was dried overnight under nitrogen and then at 110° C to remove residual solvent. A strip of the resulting film had a tenacity of 0.087 gpd and an elongation of 1076% and a set of 66% after five extension cycles to 300%. Another film was heated at 160° C for three days in a vacuum oven under nitrogen. A strip thereof had a tenacity of 0.432 gpd and an elongation of 656% and a set of 22.5% after five extension cycles to 300%.

Sample I-8

For this example, diacid radical VIII was synthesized as the major component of a mixture of oligomers from precursor monomers of diphenylterephthalate and p-phenylenediamine. Also for this sample, the desired soft segment was prepared from a 50/50 mixture of presynthesized polyester diols which are commercially available (these oligomers revert to the precursor fragments during the polymerization). A mix of 13g of the polyester diol of ethylene glycol and adipic acid (MW = 2000) and 13g of the polyester diol of butylene glycol and adipic acid (MW = 2000), 14.95g of diphenylterephthalate, 1.69g of p-phenylenediamine, 4g of ethylene glycol, 3g of butylene glycol, 0.15g of antioxidant, 0.1g of TBPS and 1cc of a 1% solution of antimony trioxide in ethylene glycol was stirred for 8 minutes at 273° C to form a clear solution. The solution was then refluxed for 22 minutes under a pressure of 250mm Hg with the temperature at 283° C. The pressure then was gradually reduced to 0.15mm, the temperature was decreased to 245° C, and polymerization was completed at this temperature.

The composition of the resultant tough polymer was calculated to contain 13.8% of -X- derived from diacid radical VIII. Then length of -X- was 15.8 Angstroms. A fiber, melt spun at 270° C and drawn 2X, was shown by DSC measurements to have a Tg of -41.9° C. and a melting point of 217.4° C. The fiber had a T/E of 0.112/597 and a set of 24.7% after five extension cycles to 300%.

Sample I-9

For this sample, 28.5g of glutaric acid, 6.86g of the dibutyl ester of diacid radical IX, 19.1g of ethylene glycol, and 0.15g of antioxidant were mixed at room temperature, after which 1 cc of a 5% solution of tetrabutyltitanate in ethylene glycol was added. After stirring for one hour at 230° C, the mixture was then polymerized.

The resultant polymer retracted to less than 1.5 times its original length within one minute after being stretched at room temperature to twice its length and held one minute before release. The composition was calculated to contain 11.6% by weight of units -X-derived from acid radical IX.

Sample I-10

For this sample, 21.6g of an approximately 80/20 mixture by weight of dimethyl glutarate and dimethyl adipate, 5.0g of the dibutyl ester of diacid radical x, 16.6g of 1,4-butanediol and 0.15g of antioxidant were mixed at room temperature, after which 1cc of a 5% solution of tetrabutyltitanate in ethylene glycol was added. The mixture was stirred for one hour at 210° C and then polymerized.

The resultant polymer retracted to less than 1.5 times its original length within one minute after being stretched at room temperature to twice its length and held one minute before release. The composition was calculated to contain 11.7% by weight of units -X-derived from acid radical X.

Sample I-11

For this sample, 19.2g of an approximately 80/20 mixture by weight of dimethyl glutarate and dimethyl adipate, 4.32g of the half ester (the monobutyl aromatic ester) half acid of diacid radical XI, 13.6g of 1,4-butanediol and 0.10g of antioxidant were mixed at room temperature, after which 1cc of a 5% solution of tetrabutyltitanate in ethylene glycol was added. The mixture was stirred for 45 min at 210°C and then polymerized.

The resultant polymer retracted to less than 1.5 times its original length within one minute after being stretched at room temperature to twice its length and held one minute before release. The composition was calculated to contain 10.2% by weight of units -X-derived from acid radical XI.

Sample I-12

For this sample, 22.9g of glutaric acid, 5.7g of adipic acid. 6.71g of the dibutyl ester of diacid radical XII, 18.8g of ethylene glycol and 0.15g of antioxidant were mixed at room temperature. Then, 1cc of a 1% solution of antimony trioxide in ethylene glycol was added and the mixture was polymerized.

The resultant polymer retracted to less than 1.5 times its original length within one minute after being stretched at room temperature to twice its length and held one minute before release. The composition was calculated to contain 11.7% by weight of units -X-derived from acid radical XII.

Sample I-13

For this sample, 29.0g of an approximately 80/20 mixture by weight of dimethyl glutarate and dimethyl adipate, 7.04g of the dibutyl ester of diacid radical XIII, 20.1g of 1,4-butanediol and 0.15g of antioxidant were mixed at room temperature, after which 1.5 cc of a 5% solution of tetrabutyl-titanate in ethylene glycol was added. The mixture was stirred for 45 minutes at 210°C and then polymerized.

The resultant polymer was colorless and retracted to less than 1.5 times its original length within one minute after being stretched at room temperature to twice its length and held one minute before release. The composition was calculated to contain 11.4% by weight of units -X- derived from acid radical XIII.

Control Samples a, b and c

These control samples illustrates diacids which provide -X- units that do not conform to the requirements of the present invention.

The diacid for Control Sample a, was:

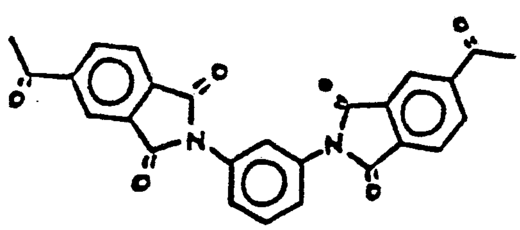

To make the elastomer of Control Sample a, 25g of adipic acid, 10g of glutaric acid, 7.71g of the above depicted diacid (formed by reacting 2 moles of trimellitic anhydride with 1 mole of m-phenylenediamine), 24g of 1,4-butanediol, 5g of ethylene glycol, 0.2g of antioxidant, and 0.25g of TBPS were mixed at room temperature, after which 2cc of a 1% solution of antimony trioxide in ethylene glycol was added, and the mixture was then polymerized with a final polymerization temperature of 270°C. The resultant polymer failed to crystallize, had the consistency of chewing gum, and was soluble in acetone. The composition was calculated to contain 10.8% by weight of -X- units derived from the diacid. The polymer inherent viscosity was 0.71. As shown in Table I, the di-n-butyl ester fo the diacid had a DSC melting point of 106°C, which is well below that required by the present invention.

The diacid for Control Sample b was:

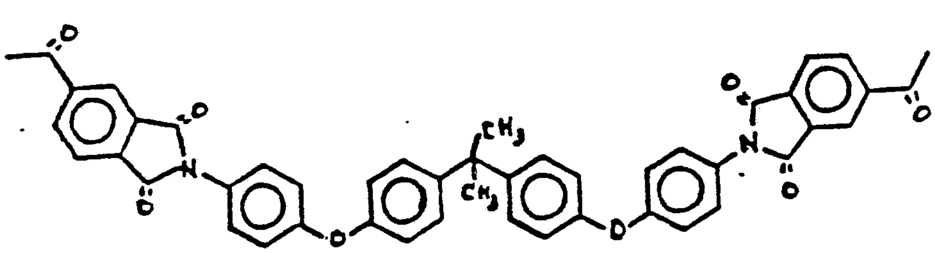

To make the elastomer of Control Sample b, 20.8g of azelaic acid, 9.2g of dodecanedioic acid. 7g of the dibutylester of the above depicted diacid (formed by reacting 2 moles of trimellitic anhydride with 1 mole of 2,2-bis[4-(4-aminophenoxy)phenyl]propane), 19g of 1,4-butanediol, 4g of ethylene glycol, 0.15g of antioxidant, and 0.1g of TBPS were mixed at room temperature, after which 2 cc of a 1% solution of antimony trioxide in ethylene glycol was added. The mixture was then polymerized with a final polymerization temperature of 270°C. The resultant polymer was not an elastomer, had the consistency of chewing gum, and was soluble in acetone. The composition was calculated to contain 12% by weight of -X- units derived from the diacid. The polymer inherent viscosity was 0.91. DSC measurements failed to indicate any melting point. Films, cast from DMAC, were still sticky and gummy after three days at 100°C or for 3 days at 160°C under nitrogen and vacuum. As shown in Table I, the di-n-butyl ester of the diacid of this control sample has a DSC melting point of 153.2°C, which is below that required by the present invention.

Control Sample c

A mixture of 8.6g of adipic acid, 3.4g of glutaric acid, 2.7 g of the diacid formed by the reaction of two moles of trimellitic anhydride with one mole of hydrazine, 4.3g of 1,4-butylene glycol, 4.1g of 1,3-propylene glycol, 6.5g of ethylene glycol, 0.1g. of antioxidant and 0.05 g. of TBPS was prepared at room temperature, after which 0.5 cc. of a 1% solution of antimony trioxide in ethylene glycol was added. The resultant mixture was then polymerized with the final polymerization temperature at 277°C. The resultant polymer failed to crystallize, was not an elastomer, had the consistency of chewing gum and was calculated to contain 11.1% by wt. of -X- units. Table I shows that the di-n-butyl ester fo the diacid containing these -X-units had a DSC melting point of 254°C and an -X- unit length of 10.8 Angstroms, below the length required by the present invention.

Table I - Example I*

| Sample | Temperature* | Length* |
|---|---|---|
| I-1 | 274.8 | 15 |
| I-2 | 352 | 21 |
| I-3 | 319 | 15.4 |
| I-4 | 298 | 17 |
| I-5 | 267 | 15.6 |
| I-6 | 273 | 15.4 |
| I-7 | >225 | 19.3 |
| I-8 | >225 | 15.8 |
| I-9 | 305 | 15.1 |
| I-10 | 255.7 | 19.3 |
| I-11 | 229.8 | 11.3 |
| I-12 | 237.9 | 19.4 |
| I-13 | 237.3 | 15.1 |
| I-a | 106 | 12.4 |
| I-b | 153 | -- |
| I-c | 254 | 10.8 |

* Notes:

* Temperature is in °C and is the DSC melting temperature of the di-n-butyl ester of the diacid that provides unit -X-.

* Length is in Angstroms and is the shortest length between the terminal junctions of the -X- unit.

EXAMPLE II

This example illustrates the invention with starting materials that provide hard-segment units -X-of radical I, but are different from the more usual diacid starting materials employed for most of the samples of the preceding example.

Sample II-1

This example shows preparation of an elastomer from the diethyl ester of the diacid that provides unit -X-radical I, diethylene glycol and various diacids. Melt-spun filaments are prepared from the elastomer.

A mix was prepared from 35g of a mixture containing about 55 weight % dimethyl glutarate, 26% dimethyl succinate, and 18% dimethyl adipate, along with 31g diethylene glycol, 11.2g of the diethyl ester of p-phenylene-bis-(N-trimellitimide) (see preparation immediately preceding Example I) and 0.14g of an antioxidant (AO-330). The mix was degassed and heated at 220-235°C for 20 min in a resin kettle equipped with a Vigreaux fractionating column attached to a distillation head and a receiving flask. Then 1/2 ml of a 5% solution of TBT (catalyst) in diethylene glycol was added to the refluxing cloudy yellow solution. The mixture was kept under nitrogen as methanol and ethanol distilled over. After 35 minutes, no more methanol or ethanol was given off. While keeping the contents of the resin kettle under nitrogen the Vigreaux column was removed and replaced by a "Teflon" joint through which passed a stirring rod was connected to a paddle. The solution was stirred, degassed, and another 1/2 ml of catalyst solution added. The temperature was raised to 256°C over a period of 17 minutes and the mixture refluxed for 18 minutes (during which time the cloudy solution cleared). The temperature was maintained at 256°C and a vacuum of 250 mm Hg applied over a period of 35 minutes. Vacuum was then applied over the next 26 minutes and the pressure reduced to 0.1 mm, at which time a very viscous polymer melt was observed. The pressure was returned to atmospheric by introduction of nitrogen, and a nitrogen blanket was maintained while adding a dry mixture of 0.22g of an antioxidant (Irganox 1098) and 0.22g of an ultraviolet stabilizer (Tinuvin 144). Vacuum was reinstated for a further 28 min. at which time the molten polymer was isolated under nitrogen.

DSC measurements of the resultant tough elastomer (at a heating rate of 20°C/min under nitrogen) indicated a glass transition temperature of -25.4°C and a crystalline phase melting at 225.0°C (heat of fusion = 2.11 Joule/g). The polymer composition contained 14.4% by weight of -X- units derived from p-phenylene-bis-(N-trimellitimide). This constitutes the "hard segment". The "soft segment" is derived from diethylene glycol and succinic, glutaric and adipic acids. Filaments, which are melt-spun at 290°C had a T/E of 0.282 gpd/197%

Sample II-2

Starting materials for the hard and soft segments of the elastomer of this sample differ from those of Sample II-1.

A mix of 4.05g of adipic acid, 19.5g of azelaic acid, 6.45g of dodecanedioic acid, 4.7g of p-phenylene-bis-(N-trimellitimide), 19.0g of 1,4-butanediol, 6.0g of ethylene glycol and 0.1g of antioxidant was degassed at room temperature, after which 2 cc of a 1% solution of antimony trioxide in ethylene glycol was added. The mixture was placed under a nitrogen blanket and the vessel containing the mixture was partially immersed in a bath at 290°C. Initial foaming subsided after about 30 min. The resulting yellow slurry was then fully immersed in the bath. After 35 min of refluxing, the solution became clear. Refluxing was continued for another 22 min under 250 mm Hg pressure. With the temperature at 286°C, over the next 17 min, pressure was gradually decreased to 0.15 mm Hg. Then temperature was decreased to 275°C. After 21 min at 0.15mm Hg pressure, the polymer became very viscous. Vacuum was released by introduction of nitrogen to the vessel. A UV stabilizer and an antioxidant were added. The melt was polymerized for another 6 min at 280°C and 0.10 mm Hg pressure.

DSC measurements of the resultant tough elastomer indicated a transition temperature, Tg, of -49.6°C. The polymer comprised 8.8% of -X- units from p-phenylene-bis-(N-trimellitimide). The inherent viscosity was 1.08.

Sample II-3

A polymer derived from the diacid corresponding to radical I and a 29/71 weight % mixture of the methyl diesters of glutaric and adipic acids with butylene glycol was prepared substantially as described in Example I for Sample 3. The polymer was calculated to contain 13.6% of -X- units and was a tough elastomer with an inherent viscosity of 1.36 in m-cresol. DSC measurements indicated a Tg of -47.7°C and a sharp melting point at 145.6°C. The elastomer was compression-molded at 300°C to form a 0.075-inch (1.9-mm) thick slab.

EXAMPLE III

This example illustrates elastomers of the invention which contain various soft segment units formed from units a., b., and/or c.

Sample III-1

An aliphatic polycarbonate soft segment is formed in the elastomer of this sample. A mix of 5.7g of p-phenylene-bis-(N-trimellitimide), 10.3g of 1,6-hexanediol, 19.0g of 1,5-pentanediol, 25g of ethylene carbonate, and 0.2g antioxidant was degassed and then 2cc of 5% TBT in ethylene glycol were added. The

solution was refluxed for 30 min at each of the following temperatures: 170, 180, and 190°C. Then, pressure was reduced to 630mm Hg and held for 30 min at each of the following temperatures: 190, 210, and 220°C. With the temperature at 220°C, pressure was gradually increased to 0.45mm over the next 95 min. After 23 min at this pressure, atmospheric pressure was restored and the polymer was isolated.

A film was cast from a hot DMAC solution of the polymer after the solution had been filtered through a cheesecloth. Solvent was removed and the cast film was maintained at 160°C for three days under nitrogen. The resulting film was a strong elastomer with an average T/E of 0.170/93. The set of one film strip was 20% after having been extended five times to 100%. The elastomer was calculated to contain 10.7% of -X- units derived from p-phenylene-bis-(N-trimellitimide).

Sample III-2

For the elastomer of this sample, caprolactone is used to provide the following soft segment units:

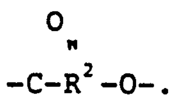

If it is desired to also incorporate units from an aliphatic diacid, the latter must be matched with an equivalent amount of units from a diol.

A mix was formed of 6.0g of p-phenylene-bis-(N-trimellitimide), 36g of caprolactone, 5g of ethylene glycol, 0.2g of antioxidant, and 0.2g of TBPS. The mix was degassed and 1cc of a 1% solution of antimony trioxide in ethylene glycol and 1cc of a 5% solution of TBT in ethylene glycol were then added. Polymerization was effected substantially as in Example I-1, except that no stabilizers were added and final polymerization temperature was 250°C.

DSC measurements of the resultant tough elastomer (after extraction with acetone and removal of solvent by drying in a vacuum oven under nitrogen at 100°C) showed a Tg of -55°C and a melting point of 144.9°C. The elastomer was calculated to contain 11.1% by weight of -X- units. The inherent viscosity of the extracted elastomer was 1.06. Films were prepared by dissolving the elastomer in hot DMAC and casting. After solvent was removed in a vacuum oven at 110°C under nitrogen, the resulting film was a strong elastomer with T/E of 0.322/395.

Sample III-3

To made the elastomer of this sample, all of the following reactants were added in one step: 25.6g of the dimethyl ester of dodecanedioic acid, 5.68g of p-phenylene-bis-(N-trimellitimide), 13.9g of distilled N,N′-dimethyl-hexandiamine in an amount which would react only with 70.8 mole % of the two aforementioned diacid derivatives, 1.6g of diethylene glycol, 2g of ethylene glycol (stoichiometric excess), 0.15g of antioxidant, and 1cc of 5% TBT in ethylene glycol. The ingredients were stirred for 45 min while being maintained at 218°C. Then the reaction temperature was raised to 283°C and the mixture polymerized as described for Sample II-2 of Example II. The mixture was maintained for 30 min at a vacuum of 0.3 mm Hg and then heated another 35 min at 292-295°C to complete the polymerization.

After extraction with acetone, the resultant product was a tough elastomer with an inherent viscosity of 0.45 in m-cresol. DSC measurements indicated a Tg of -36.7°C and a broad melting range of 140-210°C. The composition was calculated to contain 11.4% of -X- units derived from the diacid radical I. A film cast from DMAC and dried under vacuum and nitrogen at 160°C had T/E of 0.024/193 and a set of 9% after five extension cycles to 100%.

Sample III-4

To make the elastomer of this sample, all of the following reactants were added in one step: 25.7g of the dimethyl ester of azelaic acid, 19.5g of 98% pure N,N′-dimethylhexanediamine, 6.05g of diacid corresponding to radical I, and 0.15g of AO 330. These were stirred for 45 min at 212°C, after which the reaction temperature was gradually raised at 275°C over a period of 27 min. After another 10 min at this temperature, the temperature was raised to 282°C. There was no increase in melt viscosity after 4 hours, so the temperature was raised to 292°C and held there for 2 more hours, still with no apparent increase in viscosity. The reaction then was terminated.

The resultant product was a tough elastomer, even though its inherent viscosity was 0.56 in m-cresol. DSC measurements of the elastomer (after extraction with acetone) showed a Tg of -25.5°C and a melting point at 172.9°C. The elastomer was calculated to contain 11.4% of -X- units. Film cast from DMAC and dried under vacuum and nitrogen at 160°C had T/E of 0.037/241 and a set of 7% after five extension cycles to 100%.

Sample III-5

Polymers of the invention having a soft segment made substantially from neopentyl glycol (NPG) and an aliphatic acid of the formula $HOOC(CH_2)_n COOH$ with n equal to at least 7 show enhanced tenacity and

resistance to degradation in boiling water.

For this sample, 25.8g of dodecanedioic acid, 14g of neopentyl glycol, 2.5g of ethylene glycol, 2g of 1,3-propylene glycol, 5.68g of diacid (I), 0.15g of AO 330, and 1 cc of a 1% solution of antimony trioxide in ethylene glycol were stirred for 55 min at a bath temperature of 315 to 321°C, after which time the dispersion became a clear solution. Over a period of 9 minutes, the temperature was decreased to 291°C for the intermediate vacuum stage, which lasted 34 minutes. Then the melt was polymerized at 276°C substantially as described for Sample 5 of Example I.

The resultant tough elastomer had an inherent viscosity of 0.98 in m-cresol. The composition was calculated to contain 11.4% of -X- units derived from diacid radical (I). A fiber, melt spun at 240°C and drawn about 3.5X, had a tenacity of 0.41 gpd. The break elongation of this fiber was 270% and a set of 4% was obtained after five extension cycles to 100%.

Sample III-6

Elastomer of the invention having a soft segment made substantially from 1,2-propanediol and aliphatic diacid(s) show enhanced tenacity.

For this sample, 31.8g of an 80/20 by weight mixture of dimethyl glutarate and dimentyl adipate, 5.73g of p-phenylene-bis-(N-trimellitimide), 20g of 1,2-propanediol and 0.15g of antioxidant were mixed at room temperature, after which 1 cc of a 5% solution of TBT in ethylene glycol was added. After being stirred for 30 min at 210°C, the mixture was polymerized.

DSC measurements of the resultant tough elastomer (after extracting with acetone) showed a Tg of -28.2°C and a melting point at 146.3°C. The composition was calculated to contain 11.4% by weight of units -X-. The polymer inherent viscosity in m-cresol was 0.58. After treatment in an oven at 160°C under nitrogen and vacuum for 48 hours (solid phase polymerization) so as to increase the polymer molecular weight, films of the polymer were cast from DMAC. After removal of solvent in a vacuum oven at 100-110°C under nitrogen, a strip fo the resultant film had a T/E of 0.0993/1001.

Sample III-7

Elastomer of the invention having a soft segment made from phenylglycidyl ether (PGE) and other aliphatic diol(s) and aliphatic diacid(s) also show enhanced tenacity.

For this sample, 19.3g of adipic acid, 7.7g of glutaric acid, 5.68g of p-phenylene-bis-(N-trimellitimide), 3.48g of PGE, 16g of ethylene glycol, and 0.15g antioxidant were mixed at room temperature, after which 1 cc of a 1% solution of antimony trioxide in ethylene glycol was added and the mixture was polymerized.

DSC measurements of the resultant tough elastomer (after extracting with acetone) showed a Tg of -29.4°C and a melting temperature of 137.0°C. The composition was calculated to contain 11.4% by weight of -X- units. The polymer inherent viscosity in m-cresol was 0.87. Films were cast from DMAC. After removal of solvent in a vacuum oven at 100-110°C under nitrogen, a strip of the resultant film had a T/E of 0.108/805.

Sample III-8

For this sample, a thermoplastic elastomer of the invention was produced in which about 10% of the soft segment units comprise polyalkylene ether glycol moieties not conforming to the less-than-450 molecular weight requirement for the "R" of the -O-R-O- units.

The following were mixed at room temperature: 22g of adipic acid, 8.8g of glutaric acid, 6.07g of p-phenylene-bis-(N-trimellitimide), 20g of ethylene glycol, 0.2g of antioxidant, 0.15g of TBPS, and 4.1g of 2000 molecular weight polytetramethylene ether glycol, after which 1 cc of a 1% solution of antimony trioxide in ethylene glycol was added. The mix was polymerized with a final polymerization temperature of 251°C.

DSC measurements of the resultant tough elastomer (after extracting with acetone) indicated transition temperatures of -80.6°C and -34.6°C and a major melting point of 149.3°C. The composition was calculated to contain 10.4% of -X- units corresponding to radical I. The elastomer was insoluble in m-cresol. A film was cast from DMAC in which the polymer was readily soluble. After removal of solvent in a vacuum oven at 100°C under nitrogen, strips of the resultant film had a T/E of 0.075/475 and a set of 62 % after five 0-300% extension cycles. A film, kept for 3 days at 160°C under vacuum and nitrogen, had a T/E of 0.181/549 and a set of 34.8% after five extension cycles to 300%.

Sample III-9

This sample illustrates an elastomer of the invention that contains a minor amount (about 10%) of soft segment units which comprise dimer acid moieties that do not conform to the less-than-450 molecular weight requirement for the "$R^2$" of the unit

$$-\overset{\displaystyle O}{\overset{\|}{C}}-R^2-\overset{\displaystyle O}{\overset{\|}{C}}- .$$

A room-temperature mix was made of 18.4g of adipic acid, 7.35g glutaric acid, 5.68g of p-phenylene-bis-(N-trimellitimide), 18g of ethylene glycol, 0.2g of antioxidant, 0.1g of TBPS, and 3.4g of "dimer" acid, a commercially available (Emory Empol 1010) dimer of linoleic and linolenic acids (molecular weight >450) and containing 3% trimer. Then, 1 cc of a 1% solution of antimony trioxide in ethylene glycol was added to the mix. The mixture was polymerized with a final polymerization temperature of 271°C.

DSC measurements of the resultant tough elastomer (after extracting with acetone) showed a Tg of -96.8°C

and a Tg of -27.1°C and a melting point of 149.5°C. The elastomer was calculated to contain 11.4% -X- units. The polymer inherent viscosity was 0.94. Films were cast from DMAC. The solvent was removed in a vacuum oven at 100°C under nitrogen. Strips of the resultant film had a T/E of 0.044/357 and a set of 54% after five extension cycles to 300%. After 3 days at 160°C under vacuum and nitrogen, the film had a T/E of 0.162/716 and a set of 34.8% after five extension cycles to 300%.

Sample III-10

This thermoplastic elastomer of the invention includes about 10.5% by weight of soft segment derived from an aromatic dicarboxylic acid.

A room-temperature mix was made of 19.5g of adipic acid, 7.81g glutaric acid, 5.68g of p-phenylene-bis-(N-trimellitimide), 20g ethylene glycol, 0.15g of antioxidant, 0.1g of TBPS, and 4.44g of isophthalic acid, after which 1 cc of a 1% solution of antimony trioxide in ethylene glycol was added. Polymerization was performed with a final temperature of 278°C.

DSC measurements of the resultant tough elastomer (after extracting with acetone) showed a Tg of -22.7°C and a melting point of 177.6°C. The polymer inherent viscosity was 1.58. Films were cast from DMAC. After removal of solvent in a vacuum oven at 100°C under nitrogen, strips of the resultant film had a T/E of 0.084/542 and a set of 35% after five extension cycles to 300%. A film dried for 3 days at 160°C under vacuum and nitrogen had a T/E of 0.273/636 and a set of 19% after five extension cycles to 300%. A fiber, melt spun from a somewhat lower inherent viscosity replica of this elastomer, had a T/E of 0.205/478 and a set of 40% after five extension cycles to 300%.

Example IV

Sample IV-1

This sample illustrates the inclusion of a branching agent in an elastomer of the invention.

A control polymer was made first by mixing at room temperature 19.5g of adipic acid, 7.81g of glutaric acid, 5.68g of p-phenylene-bis-(N-trimellitimide), 4.44g of isophthalic acid, 20g of ethylene glycol, 0.1g of TBPS, and 0.15g antioxidant. Then 1 cc of a 1% solution of antimony trioxide in ethylene glycol was added and the mixture was polymerized. The polymer contained 10.5% of -X- units. A polymer of identical composition, but containing an added 0.1% of 1,2,6-trihydroxy-hexane branching agent, was prepared in the same manner.

The control polymer inherent viscosity in m-cresol was 1.58. The polymer containing 0.1% of the branching agent was insoluble in m-cresol. Films of both were cast from DMAC. After removal of solvent in a vacuum oven 100°C under nitrogen, a strip of the resultant control film had tenacities of 0.036 and 0.041 gpd at 100% and 200% elongation, respectively, whereas a strip of the composition containing 0.1% of the branching agent had tenacities of 0.053 and 0.060 gpd at 100% and 200% elongation, respectively. The control composition had a T/E at break of 0.084/542; the composition containing the branching agent had a T/E at break of 0.065/301.

Sample IV-2

For the elastomer of this sample, 30g of azelaic acid, 18.1 of neopentyl glycol, 2.3g of p-phenylene-bis-(N-trimellitimide), 2.5g of ethylene glycol, 2g of 1,3-propylene glycol, and 0.15g of AO 330 were mixed at room temperature, after which 1cc of a 1% solution of antimony trioxide in ethylene glycol was added. The mixture was then polymerized with a final polymerization temperature of 271°C.

The resultant product was extracted with acetone and dried. DSC measurements indicated a Tg of -52.1°C and a melting point of 122.5°C. The elastomer was calculated to contain 4.3% of radical I units -X-. The polymer inherent viscosity as measured in m-cresol was 1.25. A film cast from DMAC and dried at 110°C had a T/E of 0.036/764 and a set of 16.5% after five extension cycles to 300%.

EXAMPLE V

This example illustrated including preferred primary amine radicals (units d.) in elastomers of the invention. In preparing the elastomer, primary amine radicals were provided by: in Sample V-2, an amino-acid, 6-aminocaproic acid; and in Sample V-3, an amino-alcohol, 3-amino-1-propanol. Table II lists the identity and amount of each ingredient loaded into the polymerization kettle, the yield of elastomer, its inherent viscosity, the temperature at which it was extruded into thin strip and then wound up at 15 m/min, and the physical properties of the extruded strip.

Table II - Example V

| Sample | | V-1 | V-2 | V-3 |
|---|---|---|---|---|
| Ingredients[1] | | | | |
| HSP[2] | grams | 18.44 | 18.50 | 18.52 |
| | mol | 0.0404 | 0.0406 | 0.0406 |
| Primary amine[3] | grams | 2.72 | 4.64 | 2.67 |
| | mol | 0.0238 | 0.0354 | 0.0356 |
| Adipic acid | grams | 47.48 | 44.68 | 48.05 |
| | mol | 0.325 | 0.306 | 0.329 |
| Ethylene glycol | grams | 20.00 | 20.00 | 20.00 |
| | mol | 0.3226 | 0.3226 | 0.3226 |
| 1,4-butane diol | grams | 10.89 | 12.65 | 10.69 |
| | mol | 0.1210 | 0.1406 | 0.1188 |
| Resultant Elastomer | | | | |
| Yield, grams | | 62.8 | 69.4 | 69.0 |
| Viscosity, $\mu_{inh}$, dL/g | | 0.90 | 0.92 | 0.98 |
| % -X- | | 18.6 | 18.6 | 18.6 |
| % amine units | | 3.4 | 5.0 | 3.2 |
| Extrusion Temp.,°C | | 197 | 211 | 207 |
| Strip Properties | | | | |
| $T_b$, Tenacity, g/den | | 0.23 | 0.16 | 0.11 |
| $E_b$, Elongation, % | | 636 | 827 | 556 |
| UP, Power, g/eff den | | 0.79 | 0.87 | 0.78 |
| Set, % | | 39.4 | 43.7 | 44.9 |

Notes:

1. Also included are 0.3 gram of Ethyl Antioxidant 330 and 4mL of a 1% solution of antimony trioxide in ethylene glycol.

2. HSP is p-phenylene-N,N'-bis-trimellitimide.

3. The primary amine ingredient is:
   trans-1,4-diaminocyclohexane for V-1,
   6-aminocaproic acid for V-2 and
   3-amino-1-propanol for V-3.

EXAMPLE VI

This example compares strip properties of elastomers of the invention containing various amounts of primary amine units in their soft segments (Samples VI-1, -2 and -3) with those of like elastomers that do not contain such amine units (Comparisons VI-a, -b and -c). The strips were extruded and wound up as described in Example V. When present, the primary amine units amounted to 5% by total weight of the elastomer and were provided by 11-aminoundecanoic acid which was included in the ingredients used for preparing the elastomers. Table III shows that the elastomers with the primary amine units have lower set, higher unload power, and higher break elongation.

Table III - Example VI

| Samples VI- | 1 | a | 2 | b | 3 | c |
|---|---|---|---|---|---|---|
| Ingredients[1] | | | | | | |
| HSP | 11.03 | 11.35 | 14.80 | 14.80 | 18.50 | 18.50 |
| amine | 4.39 | 0 | 4.39 | 0 | 4.39 | 0 |
| acid | 50.24 | 49.44 | 47.87 | 51.06 | 44.68 | 47.87 |
| 2G | 17 | 20 | 20 | 20 | 20 | 20 |
| 4G | 17 | 20 | 13.15 | 13.94 | 12.65 | 13.45 |
| Elastomer[2] | | | | | | |
| $\mu_{inh}$ | 0.92 | 1.36 | 1.20 | 1.08 | 0.87 | 1.08 |
| % -X- | 11.1 | 11.1 | 14.8 | 14.8 | 18.6 | 18.6 |
| % amine | 5 | 0 | 5 | 0 | 5 | 0 |
| Strip | | | | | | |
| $T_b$ | 0.08 | 0.08 | 0.11 | 0.06 | 0.15 | 0.07 |
| $E_b$ | 896 | 412 | 392 | 291 | 728 | 447 |
| UP | 0.94 | 0.57 | 0.87 | 0.15 | 0.77 | 0.02 |
| Set | 31.5 | 59.7 | 45.1 | 79.5 | 66.1 | 104.4 |

Notes to Table III:

1. Weight of each ingredient is in grams. The ingredients are:
   HSP = p-phenylene-N,N'-bis-trimellitimide
   amine = 11-aminoundecanoic acid
   acid = adipic acid
   2G = ethylene glycol
   4G = 1,4-butane diol

2. See Table II for units of various parameters concerning the elastomer and properties of extruded strip. % amine refers to the primary amine units in the elastomer.

EXAMPLE VII

This example illustrates the effect of amine concentration in elastomers of the invention. The procedures of Example VI were repeated with ingredients that provided a range of 0 to 20 weight percent of amine units in the final elastomer and an elastomer having 18.6 % by weight -X- hard segment. The primary amine units are provided by 11-aminoundecanoic acid. Each of the elastomer preparations of this Example, included 18.50 grams of HSP (p-phenylene-N,N'-bis-trimellitimide) and 20 grams of ethylene glycol. The results of the procedures and the properties of the resultant elastomer strips are summarized in Table IV. The elastomer of Comparison VI-c of Example VI, which also contains 18.6 % hard segment but no amine units, is included in Table IV. Sample VI-3, also is repeated from Example VI.

The results show that with two weight percent of amine units in the elastomers of the invention, or even less, the properties of strips prepared from the elastomers are improved significantly in break elongation, unload

power and set, as compared to the elastomer strips having no amine units in the soft segment. Tenacity of the strips also is improved. However 20% primary amine units in the elastomer caused the elastomer to be too sticky to extrude.

Table IV - Example VII

| Sample | VI-c | VII-1 | VII-2 | VI-3 | VII-3 | VII-4 |
|---|---|---|---|---|---|---|
| Ingredients[1] | | | | | | |
| amine | 0 | 1.76 | 2.64 | 4.39 | 8.79 | 13.18 |
| acid | 47.87 | 46.59 | 45.95 | 44.68 | 41.49 | 38.29 |
| 4G | 13.45 | 13.13 | 12.97 | 12.65 | 11.85 | 11.05 |
| Elastomer[2] | | | | | | |
| % amine | 0 | 2 | 3 | 5 | 10 | 15 |
| Strip | | | | | | |
| $T_b$ | 0.07 | 0.10 | 0.08 | 0.15 | 0.14 | 0.08 |
| $E_b$ | 447 | 956 | 570 | 728 | 677 | 727 |
| UP | 0.02 | 0.07 | 0.15 | 0.68 | 0.56 | 0.87 |
| Set | 104.4 | 82.6 | 83.3 | 66.1 | 46.2 | 24.6 |

Notes: See notes of Table III.

EXAMPLE VIII

Example VII was repeated to form an elastomer that contained, based on total elastomer weight, 18.6 % -X- hard segment and 5% primary amine radicals derived from the following amino-acids: Sample VIII-1 glycine

Sample VIII-2 alanine
Sample VIII-3 4-aminobutyric acid
Sample VIII-4 5-aminovaleric acid
Sample VIII-5 para-aminobenzoic acid
Sample VIII-6 4-aminophenylacetic acid
Sample VIII-7 4-methylaminobenzoic acid

In making each of the elastomers, 18.50 grams of HSP (p-pheylene-N,N'-bis-trimellitimide), 44.68 grams of adipic acid, 12.65 grams of 1,4-butane diol and 20 grams of ethylene glycol, plus the usual other ingredients and the amount of amino acid listed in Table V were employed. The physical properties of strip made from the elastomers are summarized in Table V.

Table V - Example VIII

| Sample VIII- | 1 | 2 | 3 | 4 | 5 | 6 | 7 |
|---|---|---|---|---|---|---|---|
| Amine, grams | 5.26 | 5.01 | 4.85 | 4.73 | 4.60 | 4.54 | 4.54 |
| Strip | | | | | | | |
| $T_b$ | 0.06 | 0.05 | 0.10 | 0.06 | 0.13 | 0.11 | 0.11 |
| $E_b$ | 502 | 239 | 835 | 607 | 820 | 794 | 510 |
| UP | 0.48 | 0.36 | 0.40 | 0.14 | 0.20 | 0.28 | 0.69 |
| Set | 41.2 | 43.5 | 59.6 | 71.7 | 69.9 | 78.1 | 47.0 |

Notes: See notes of Table III.

EXAMPLE IX

This example illustrates various processes for preparing elastomers of the present invention.

Sample IX-1

The process for preparing this elastomer sample is a two step process. In the first step, the hard segment precursor is synthesized as a slurry in an inert medium from the appropriate anhydride and diamine. A liquid reaction medium is necessary in the first step to allow in situ preparation of the diacid as a slurry of fine particles. The reaction medium is preferably any diester of an aliphatic diacid (or mixture of such diesters) that is (are) liquid at about 100°C and inert to the reaction with aromatic diamines or cyclic anhydrides. In the second step, the other required monomers and catalyst are added to the slurry and the resultant suspension is then polymerized without isolation or further purification of the diacid, the added catalyst causing the previously inert reaction medium to become a coreactant so that the need for reaction medium recovery is avoided.

A 10/90 by weight mixture (30.3g) of the dimethyl esters of glutaric and adipic acids, respectively, 4.7g of trimellitic anhydride, 1.35g of p-phenylenediamine, and 0.15g of antioxidant were stirred for 30 min at 215°C under nitrogen. Then 19.7g of diethylene glycol, 3g of ethylene glycol, and 0.1g of TBPS were added to the resultant fine slurry, which was then stirred for 5 min at 215°C. Then 1 cc of a 5% solution of TBT in ethylene glycol was added and the solution was stirred for 60 min at 213°C, after which the reaction temperature was raised to 253°C. The dispersion became a clear solution after stirring for 29 min at 253°C under nitrogen. This clear solution was then polymerized substantially as described in Example I for Sample 1.

The resultant tough elastomer had an inherent viscosity of 1.58 in m-cresol. A piece of polymer was stretched at room temperature to twice its length and held for one minute before release. Within one minute thereafter, it retracted to less than 1.5 times its original length. DSC measurements of the elastomer (after extraction with acetone) showed a Tg of -22.8°C and a melting point of 157.6°C. The composition was calculated to contain 10.4% of -X- units derived from p-phenylene-bis-(N-trimellitimide). A fiber, melt spun from the elastomer at 288°C and drawn 2X, had T/E of 0.126/237 and a set of 23.3% after five extension cycles to 200%.

Sample IX-2

In the process for preparing the elastomer of this sample, all of the monomers were added in one step. This example also shows in situ preparation of diacid radical IV.

A room-temperature mix was made of 2.92g of benzophenone dianhydride, 3.7g of the mono-n-butyl ester of p-aminobenzoic acid, 25g of azelaic acid, 14.5g of diethylene glycol, 2g of ethylene glycol, 3g of 1,3-propylene glycol, 0.2g of antioxidant, and 0.1g of TBPS, after which 1.7cc of a 1% solution of antimony trioxide in ethylene glycol was added. The mixture was then polymerized.

DSC measurements of the resultant tough elastomer showed a Tg of -47.0°C and a melting point of 199.2°C. The inherent viscosity in m-cresol was 1.00. The composition was calculated to contain 10.7% of -X-units derived from diacid radical IV.

Sample IX-3

For this sample, 22.2g of a mixture of approximately 27% succinic, 61% glutaric, and 12% adipic acids by weight obtained by distillation of a waste stream, 1.42g of p-phenylene diamine, 4.78g of trimellitic anhydride, 23.5g of neopenty glycol and 0.15g of antioxidant were mixed at room temperature, after which 1 cc of a 1% solution of antimony trioxide in ethylene glycol was added. After about 30 minutes of stirring 50°C, the mixture was polymerized.

DSC measurement of the resultant tough elastomer (after extraction with acetone) showed a Tg of -19.6°C. The composition was calculated to contain 11.4% of units -X-. The polymer inherent viscosity in m-cresol was 0.94. Films were cast from DMAC. After removal of solvent in a vacuum oven at 100-110°C under nitrogen, a strip of the resultant film had a T/E of 0.056/193.

Sample IX-4

For the elastomer of this sample, all of the reactants were added in one step. Aliphatic diacids were added in the form of the free diacids, and the initial part of the reaction was conducted at a sufficiently low temperature to avoid substantial dissolving of the solid aliphatic diacid(s).

Specifically, 22.2g of a distilled 26/59/12 by weight mixture of succinic, glutaric, and adipic acids, respectively, 4.78g of trimellitic anhydride, 1.42g of p-phenylenediamine, 23.5g of neopentyl glycol, 0.15g of AO 330, and 1cc of a 1% solution of antimony trioxide in ethylene glycol were stirred for 22 min at approximately 70°C while suspended over a Woods metal bath at 297°C, during which time the acid mixture (in the form of flakes) did not appear to dissolve substantially. The reaction vessel was then immersed in the bath. After 80 min, the dispersion became a clear solution. This clear solution was then stirred for another 8 min and the temperature was decreased to 275°C, after which the melt was polymerized, substantially as described for Sample 2 of Example II.

The resultant tough elastomer had an inherent viscosity of 0.94 in m-cresol. DSC measurements of the elastomer (after extraction with acetone) showed a Tg of -19.6°C and a melting temperature of 128.9°C. The composition was calculated to contain 11.4% of units -XC-derived from p-phenylene-bis-(N-trimellitimide).

Sample IX-5

For the elastomer of this sample, all of the reactants were added in one step with aliphatic diacids being added in the form of their dialkyl esters.

Specifically 34.4g of a 29/71 by weight mixture of the dimethyl esters of glutaric and adipic acids, respectively, 4.7g trimellitic anhydride, 1.4g of p-phenylenediamine, 19g of ethylene glycol, 0.2g of AO 330, and 0.75cc of a 5% solution of TBT in ethylene glycol were stirred for 45 min at 212°C, after which the reaction temperature was increased to 273°C over a period of 30 min, during which time the dispersion became a clear solution. The clear solution was then polymerized at 250°C, substantially as described for Sample 2 of Example II.

The resultant tough elastomer had an inherent viscosity of 0.80 in m-cresol. DSC measurements of the elastomer (after extraction with acetone) showed a Tg of -28.8°C and a broad melting point with the minimum of the endotherm at 140.5°C. The composition was calculated to contain 11.4% of units -X- derived from p-phenylene-N,N′-bis-trimellitimide. A film cast from DMAC and dried vacuum and nitrogen at 110°C had T/E of 0.071/835 and a set of 23.3% after five extension cycles to 300%.

Sample IX-6

Another process for preparing elastomers of the invention is illustrated for this sample. The process involves first forming a slurry of the precursors of the high molecular weight diacid hard segment and one or more diols providing units of the soft segment and then adding a catalyst and one or more diacids providing units of the soft segment. The mixture is heated to form the prepolymer and then further polymerized to achieve high molecular weight. Preferably the slurry is formed at room temperature. A solvent for the diols can be added to facilitate formation of the slurry. This is of particular advantage when dealing with diols which are not liquid at room temperature.

For the elastomer of this sample, 9.6 g of trimellitic anhydride, 2.7 g of para-phenylenediamine, 20 g of ethylene glycol and 20 g of 1,4-butanediol were placed in the reaction kettle. The contents of the kettle were rapidly stirred under a nitrogen atmosphere at room temperature for about 45 minutes, during which time, a thick yellow slurry had developed, indicating the formation of a high molecular weight acid hard segment and/or its intermediates. To the slurry was then added 49.4 g of adipic acid, 0.4 g of an antioxidant (Ethyl Antioxidant 330), and 3.5 ml of a 1% solution of antimony trioxide in ethylene glycol. The slurry was again purged with nitrogen, stirred and heated at 220°C for 45 minutes. The temperature was then increased to 260-285°C and the mixture was rapidly stirred at this temperature for 1-3/4 hours. The temperature was then maintained at 265°C and while the kettle was slowly evacuated over the course of 1-1/2 hours to about 0.5 mm Hg pressure. The polymer was then stirred at a temperature of 265°C and under a pressure of 0.5-0.25 mm Hg until a very viscous polymer melt was obtained (in about 15 minutes). The molten polymer was then removed from the kettle to give 58.5 g of product.

DSC measurements of the resultant tough elastomer showed a Tg of -47.7°C. The composition was calculated to contain 11.4% of units -X- derived from p-phenylene-bis-(N-trimellitimide). The inherent viscosity, measured in hexafluoroisopropanol, was 1.89.

**Claims**

1. An elastomer characterized in that the elastomer consists essentially of

A. from about 5 to 25 weight percent of -X- units where -X- is part of a repeat unit having the structural formula, -Y-X-Z-, where -Y- and -Z- are independently selected from

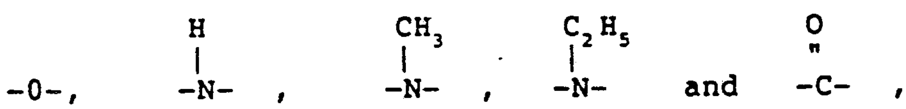
and

-X- is a divalent organic radical consisting of a chain of ring structures except for trans-amide, carbonyl, trans-vinylene, azo, and azomethine linkages which may be present and whose shortest length between centers of its terminal junctions measured from a Dreiding model laid flat is at least 11 Angstroms; and when -X- is in the compound

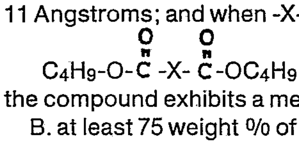

the compound exhibits a melting point that is at least about 225°C and

B. at least 75 weight % of units selected from the following

a. -O-R-O-, and/or

$R^5$ $R^5$
| |
$-N-R^1-N-$ and

O O O
b. - C -$R^2$- C and/or - C -,

in which both free bonds are connected to oxygen and/or nitrogen and/or

O
c. - C -$R^3$-O- and/or

O $R^5$
|
$-C-R^4-N-$

and optionally an effective amount of

H
|
d. - N -$R^6$-A-

wherein R, $R^1$, $R^2$, $R^3$ and $R^4$ are each aliphatic divalent organic radicals, having from 2 to 15 carbon atoms within the chain, with each having a molecular weight of less than 450,

$R^5$ is a hydrocarbon radical,

$R^6$ is a divalent aliphatic or cycloaliphatic radical having 1 to 15 carbon atoms, or a divalent aromatic radical containing 1, 2 or 3 six-membered rings, the rings being non-substituted or substituted with monovalent or divalent alkyl radicals having 1 to 4 carbon atoms, provided that when the alkyl is divalent, one of the valencies is connected to the -NH- radical or to the -A- radical and

-A- is

H O $R^5$
| |
-N- , -C- , -O- or -N- .

2. An elastomer according to claim 1 wherein -Y-X-Z- is selected from the group consiting of

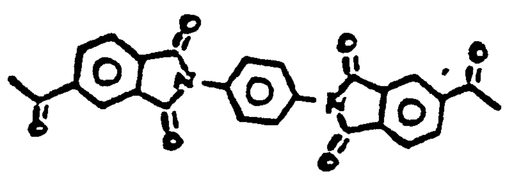

(I)

;

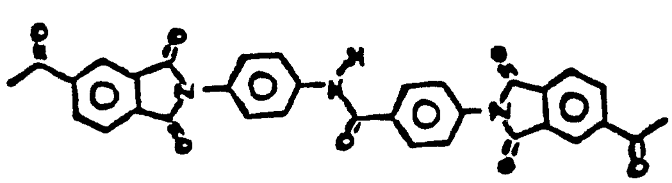

(II)

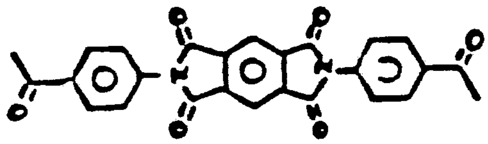

(III)

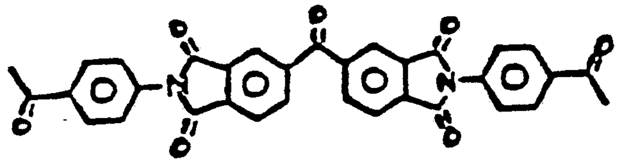

(IV)

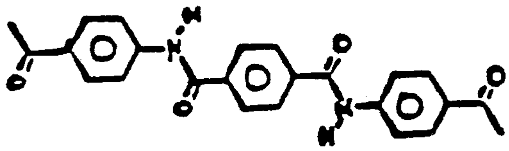

(V)

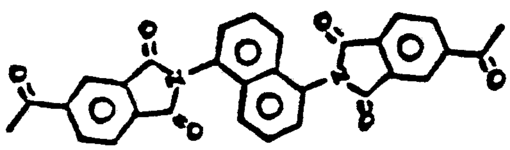

(VI)

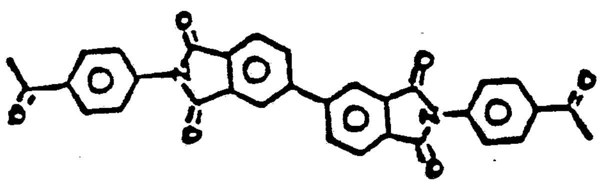

(VII)

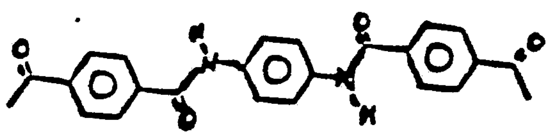

(VIII)

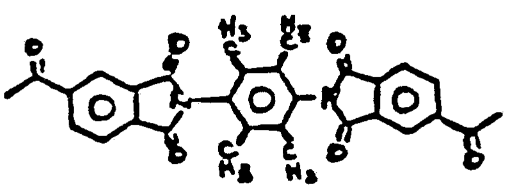

(IX)

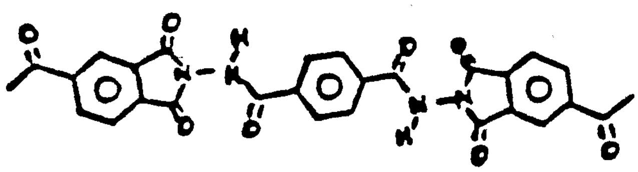

(X)

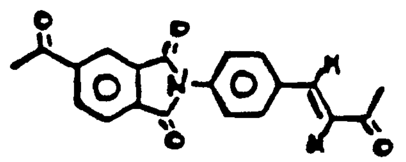

(XI)

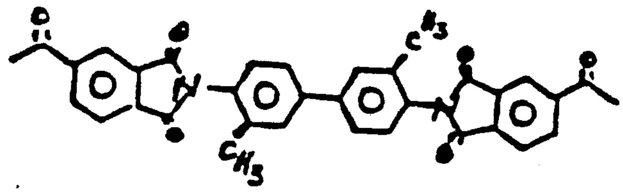

(XII)

and

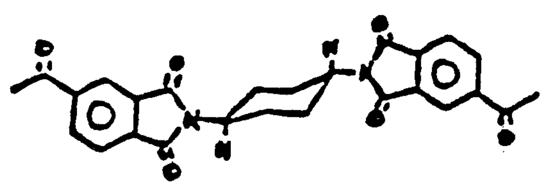

(XIII)

3. An elastomer according to claim 1 or claim 2 wherein the primary amine units d. amount to 1 to 15 weight percent.
4. An elastomer according to any one of claims 1 to 3 wherein the -X- units amount to 15 to 25 percent.
5. An elastomer according to any one of the preceding claims wherein the d. units are residues of diamines and amount to 3 to 6 percent by weight of the elastomer.
6. An elastomer according to any one of claims 1 to 4 wherein the d. units are residues of amino alcohols and amount to 3 to 6 percent by weight of the elastomer.
7. An elastomer according to any one of claims 1 to 4 wherein the d. units are residues of amino acids and amount to 5 to 10 percent by weight of the elastomer.
8. An elastomer according to claim 5 wherein the diamine is trans-1,4-diaminocyclohexane.
9. An elastomer according to claim 6 wherein the amino alcohol is 3-amino-1-propanol.
10. An elastomer according to claim 7 wherein the amino acid is selected from the group consisting of 11-aminoundecanoic acid and 6-aminocaproic acid.
11. An elastomer according to claim 1 wherein the a. units are residues of neopentyl glycol and the b. units are residues of dibasic acids having at least 7 straight-chain carbon atoms between carboxyl groups.
12. A fiber, film or molded article of the elastomer of claim 1.
13. A method of improving the tenacity and set of fibers or films from the elastomers of claim 1 comprising heating the fibers or films for at least two hours at a temperature of at least 150°C under an inert atmosphere.
14. A process for preparing an elastomer of claim 1 which comprises heating, at a temperature of about 200 to 300°C in the presence of an esterification catalyst, a high molecular weight diacid of the formula

$$HO\overset{O}{\overset{\|}{C}}-X-\overset{O}{\overset{\|}{C}}OH$$

where -X- is as defined in claim 1 with one or more diols, diacids and primary amine-containing ingredients that provide units a., b. and d. of claim 1, said diols being in excess of stoichiometry, to form prepolymer and then extending prepolymer to high molecular weight.
15. A process according to claim 14 wherein the high molecular weight diacid is p-phenylene-bis-(N-trimellitimide).
16. A process according to claim 14 wherein the high molecular weight diacid is first formed as a slurry in

one or more esters of diacids providing unit b. after which catalyst and one or more of the diols providing unit a. and optionally one or more amine-containing compounds providing unit d. are added and the mixture heated to form the prepolymer.

17. A process for preparing an elastomer of claim 1 wherein the precursors of the high molecular weight diacid and one or more diols providing unit a. are first formed into a slurry, after which a catalyst, one or more diacids providing unit b., and optionally one or more amine-containing compounds providing units d. are added and the mixture is heated to form the prepolymer, which is then increased in molecular weight.

18. A process according to claim 17 wherein the slurry formation is carried out at room temperature.